# EUROPÄISCHE PATENTSCHRIFT

(11) **EP 0 947 712 B1**
(45) Veröffentlichungstag und Bekanntmachung des Hinweises auf die Patenterteilung: **10.09.2003**
(21) Anmeldenummer: 99810211.5
(22) Anmeldetag: 10.03.1999
(51) Int. Cl.: F16B 13/08

(54) **Spreizdübel**
Expansion dowel
Cheville d'expansion

(30) Priorität: 04.04.1998 DE 19815177
(43) Veröffentlichungstag der Anmeldung: 06.10.1999
(73) Patentinhaber: HILTI Aktiengesellschaft, 9494 Schaan (LI)
(72) Erfinder: Gassner, Helmut, 9497 Triesenberg (LI); Knall, Gerit, 6811 Göfis (AT); Hartmann, Markus, 87665 Mauerstetten (DE); Surberg, Cord-Henrik, 6800 Feldkirch (AT); Seyfferth, Wolfgang, 6805 Feldkirch-Gisingen (AT)
(74) Vertreter: Wildi, Roland

(56) Entgegenhaltungen:
- EP-A- 0 007 386
- EP-A- 0 211 802
- DE-C- 335 291
- US-A- 2 743 837

## Beschreibung

Die Erfindung betrifft einen Spreizdübel gemäss dem Oberbegriff des Patentanspruchs 1.

In der Befestigungstechnik kommen vielfach Spreizdübel zum Einsatz, die eine Dübelhülse mit einem Spreizbereich aufweisen. Axiale Schlitze ermöglichen die radiale Aufweitung des Spreizbereichs durch einen in einer Durchgangsbohrung der Dübelhülse axial verschiebbaren Spreizkörper. Die Durchgangsbohrung im Spreizbereich und/oder der Spreizkörper weisen eine konische Form auf. Die Verspreizung dieser bekannten Spreizdübel in einem Bohrloch erfolgt üblicherweise durch eine schlagende Relativverschiebung des Spreizkörpers in der Durchgangsbohrung des Spreizbereichs. Dabei kann der Spreizkörper gänzlich im Inneren der Durchgangsbohrung angeordnet sein. Bei diesen Varianten der Spreizdübel sind meist zusätzliche Verliersicherungen für den Spreizkörper erforderlich. Die Verspreizung erfolgt durch schlagendes Eintreiben des Spreizkörpers in die Durchgangsbohrung (siehe EP-A-0 211 802). Im gesetzten Zustand soll der Spreizkörper durch Selbsthemmung in der Durchgangsbohrung gehalten sein. Wegen der erforderlichen Selbsthemmung sind die Neigungswinkel der Konusflächen relativ flach. Um dennoch die erforderlichen Spreizkräfte zu erzielen, muss der Spreizkörper relativ lang ausgebildet sein und nimmt er vielfach etwa die Hälfte der axialen Länge der Spreizhülse ein. Dadurch verbleibt für eine Gewindestange nur eine relativ geringe Einschraublänge; ein Nachjustieren kann nur in sehr beschränktem Ausmass erfolgen. Infolge der relativ geringen Einschraubtiefe besteht bei Querbelastung die Gefahr eines Bruches der Spreizhülse.

In einer alternativen Ausführungsform ragt ein konischer Spreizkörper aus der vorderen Mündung der Durchgangsbohrung. Zur Verspreizung dieses meist als "Outcone-Dübel" bezeichneten Spreizdübels wird die Dübelhülse über den sich am Bohrlochgrund abstützenden, konischen Spreizkörper geschlagen. Bei belasteten "Outcone-Dübeln" ist der Spreizkörper nur durch die Reibung zwischen der Aussenfläche des Spreizkörpers und der Innenfläche der Spreizhülse gesichert. Dabei kann der Neigungswinkel der konischen Aussenfläche des Spreizkörpers nicht grösser als der Winkel der Selbsthemmung gewählt werden. Um dennoch die erforderlichen Spreizkräfte zu erzielen, muss der Spreizkörper relativ lang ausgebildet sein. Beim Setzvorgang besteht infolge der Länge des Spreizkörpers die Gefahr, dass er sich schräg legt und verkantet.

Aufgabe der vorliegenden Erfindung ist es daher, diesen Nachteilen der Spreizdübel des Stands der Technik abzuhelfen. Es soll ein Spreizdübel geschaffen werden, der eine grössere Sicherheit gegen ein Wiederausdrücken des in die Bohrung eingetriebenen Spreizkörpers bietet. Dabei soll ein Schräglegen und Verkanten beim Setzvorgang zuverlässig verhindert sein. Bei gleichbleibender Gesamtbaulänge des Spreizdübels soll die Länge des Anschlussgewindes vergrössert und damit die Querkrafttragfähigkeit verbessert werden können. Zudem soll durch die Erfindung die Voraussetzung dafür geschaffen werden, der bislang nur relativ beschränkten Risstauglichkeit der bekannten Spreizdübel abzuhelfen.

Die Lösung dieser Aufgaben besteht in einem Spreizdübel mit den im kennzeichnenden Abschnitt angeführten Merkmalen. Der erfindungsgemässe Spreizdübel besitzt einen Dübelkörper, der mit einem Lastangriffsmittel ausgestattet ist und an seinem dem Lastangriffsmittel gegenüberliegenden Endabschnitt einen Spreizbereich aufweist. Der Spreizbereich weist einen oder mehrere durch axiale Schlitze voneinander getrennte Spreizlappen auf und ist mit einer am vorderen Ende des Dübelkörpers mündenden Aussparung versehen, in der ein Spreizkörper gehalten und unter radialem Aufweiten des Spreizbereichs axial verschiebbar ist. Die Aussparung ist von einem axial verlaufenden Aufnahmespalt gebildet, dessen achsnähere Begrenzungsfläche von einem Führungsstift und dessen zweite Begrenzungsfläche von der Rückfläche der Spreizlappen gebildet ist. Der Spreizkörper ist im wesentlichen hülsenartig ausgebildet und weist eine Innenfläche auf, deren Verlauf mit der achsnäheren Begrenzungsfläche des Aufnahmespalts im wesentlichen übereinstimmt. Die Aussenfläche des Spreizkörpers ist wenigstens bereichsweise als Keilfläche ausgebildet. Im radial ausgestellten Zustand der Spreizlappen ist der hülsenförmige Spreizkörper in weitgehend flächiger Anlage zu den beiden Begrenzungsflächen des Aufnahmespalts.

Zum Unterschied von den bekannten Spreizdübeln ist bei dem erfindungsgemässen Spreizdübel der hülsenartige Spreizkörper im gesetzten Zustand durch einen doppelten Reibschluss gesichert. Dabei wirkt die Innenfläche des Spreizkörpers mit einem zum Dübelkörper gehörigen Führungsstift für den Spreizkörper zusammen, und die Aussenfläche des Spreizkörpers ist in flächiger Anlage zur Rückfläche der Spreizlappen. Dadurch wird der auf den eingetriebenen Spreizkörper wirkenden Ausdrückkraft eine gegenüber den bekannten Spreizdübeln etwa doppelt so grosse Reibkraft entgegengesetzt. Dies bedeutet, dass bei gleich grossem Neigungswinkel der als Keilfläche ausgebildeten Aussenfläche des Spreizkörpers die Sicherung gegen ein Wiederausdrücken deutlich erhöht ist. Andererseits besteht durch die erfindungsgemässe Ausbildung die Möglichkeit, bei gleichbleibender Sicherheit gegen ein Wiederausdrücken des Spreizkörpers den Neigungswinkel der Keilfläche um bis zu 100% zu vergrössem.

Die Möglichkeit, ohne Nachteil für seine Sicherung innerhalb des Aufnahmespalts den Neigungswinkel der Keilfläche des Spreizkörpers vergrössern zu können, erlaubt es, durch eine Modifikation der Spreizlappen während des Setzvorgangs eine Hintermeisselung im Bohrlochtiefsten herzustellen. Dazu können die Spreizlappen an ihren freien Vorderenden mit von der Aussenfläche abragenden Schneiden versehen sein. Der Spanwinkel der Schneiden beträgt dabei mit Vorteil etwa 5° bis 10°. Zur besseren Übereinstimmung von Meissel- und Schleppkurve weisen die Spreizlappen weitgehend torusähnliche Aussenflächen auf. Der Krümmungsradius der torusähnlichen Aussenfläche beträgt dabei etwa 300% bis 450% des Nennanschlussdurchmessers des Spreizdübels. Durch die formschlüssige Hintermeisselung weist der erfindungsgemässe Spreizdübel sowohl im ungerissenen als auch im gerissenen Untergrund höhere Lastwerte auf. Bohrlochtoleranzen erweisen sich nicht mehr bestimmend für das Tragverhalten. Infolge des meisselnd erstellten Formschlusses im Bohrlochtiefsten sind die bei der Belastung auftretenden Spreizkräfte relativ gering. Dadurch erlaubt der erfindungsgemäss ausgebildete Spreizdübel auch geringere Rand- und Achsabstände.

Der grössere Neigungswinkel der Aussenfläche erlaubt eine kürzere Bauweise des Spreizkörpers. Dadurch steht für ein Anschlussgewinde eine grössere Baulänge zur Verfügung, was eine grössere Nachjustiermöglichkeit für eine eingeschraubte Gewindestange bedeutet. Infolge der grösseren Einschraublänge kann die Querkrafttragfähigkeit des erfindungsgemässen Spreizdübels erhöht und die Gefahr von Brüchen der Spreizhülse verringert werden. Durch die flächige Anlage des hülsenförmigen Spreizkörpers an den Begrenzungsflächen des Aufnahmespalts wird die Steifigkeit des Spreizdübels erhöht. Lokale Verformungen infolge linienförmiger Anlagen können vermieden werden. Der Spreizkörper ist bereits im Ausgangszustand über seine Innen- und Aussenfläche im Aufnahmespalt gehalten. Beim schlagenden Eintreiben des Spreizkörpers wird er an beiden Flächen geführt. Dadurch wird ein Verkippen und Verkanten des Spreizkörpers wirkungsvoll vermieden.

Der Führungsstift ist ein Bestandteil des Dübelkörpers und dient zur leichteren Einführung des hülsenförmigen Spreizkörpers in den Aufnahmespalt. Bei Belastung übernimmt auch der Führungsstift einen Teil der Zugbelastung. Dazu erweist es sich von Vorteil, wenn sein Spannungsquerschnitt wenigstens 25% der Summe der Spannungsquerschnitte der Spreizlappen beträgt.

Der Führungsstift weist mit Vorteil eine axiale Länge auf, die gleich oder grösser ist als die axiale Tiefe des Aufnahmespalts. Bei einem längeren Führungsstift ergibt sich für den Spreizkörper eine besonders gute Führung. Vorzugsweise entspricht die Länge des Führungsstifts der Länge des Spreizkörpers. Bei vollständiger Verspreizung der Spreizlappen schlägt der Dübelkörper über den Führungsstift auf den Untergrund. Der Anwender erkennt dies beispielsweise am geänderten Klang und am Zurückprallen des Hammers beim Auftreffen auf die Spreizhülse. Auf diese Weise ist für ihn die Beendigung des Setzvorgangs und die erfolgreiche Verspreizung des Spreizdübels ersichtlich.

In einer Variante der Erfindung umfasst der Aufnahmespalt wenigstens zwei Schlitze, die sich vom Vorderende des Dübelkörpers aus axial erstrecken und sehnenartig am Umfang des Dübelkörpers münden. Die Schlitze definieren gleichzeitig die radial ausstellbaren Spreizlappen. Der zwischen den Schlitzen verbleibende Abschnitt des Dübelkörpers bildet den Führungsstift.

Um möglichst grosse Reibflächen für die Sicherung des Spreizkörpers zu schaffen, erweist es sich von Vorteil, wenn der Aufnahmespalt für den Spreizkörper in Draufsicht eine geschlossene Kontur aufweist. Dabei kann die Kontur des Aufnahmespalts kreisringförmig oder polygonal sein.

Aus Symmetriegründen und in Hinblick auf die erzielbaren Spannungsquerschnitte der Spreizlappen besitzt der Aufnahmespalt in Draufsicht vorzugsweise die Kontur eines gleichseitigen Dreiecks. Diese Kontur ist durch drei Schlitze gebildet, die sich vom Vorderende des Dübelkörpers aus axial erstrecken und sehnenartig am Umfang des Dübelkörpers münden.

Zweckmässigerweise ist das Lastangriffsmittel ein in einer Bohrung im rückwärtigen Abschnitt des Dübelkörpers vorgesehenes Innengewinde bzw. ein Aussengewinde einer Gewindestange. Um bei Belastung die Gefahr eines Bruchs der Spreizlappen zu vermeiden, ist bei der Anordnung der den Aufnahmespalt bildenden Schlitze darauf zu achten, dass der minimale Spannungsquerschnitt der Spreizlappen mindestens so gross ist wie der Spannungsquerschnitt im Bereich des Anschlussgewindes. Aus dieser Forderung ergibt sich für die axiale Tiefe des von den Schlitzen gebildeten Aufnahmespalts ein Wert von 60% bis 85 % des Nenndurchmessers des Anschlussgewindes.

Insbesondere im Hinblick auf die meisselnde Erstellung eines Formschlusses durch die radial ausgestellten Spreizlappen erweist es sich von Vorteil, wenn die Keilfläche des in den Aufnahmespalt eingetriebenen Spreizkörpers mit seiner Achse einen Winkel von etwa 5° bis etwa 25° einschliesst. Auf diese Weise müssen beim Setzvorgang kaum senkrecht zur Bohrlochwandung gerichtete Spreizkräfte aufgebracht werden. Vielmehr werden die Hammerschläge in schräg zur Bohrlochwandung gerichtete Meisselkräfte umgesetzt. Dadurch kann der Spreizdübel mit deutlich geringerem Aufwand im Untergrund verankert werden.

Um zu erreichen, dass der hülsenförmige Spreizkörper beim Setzvorgang möglichst flächig am Bohrlochgrund aufsteht, ist es von Vorteil, wenn die an den durchmessergrössten Abschnitt des Spreizkörpers anschliessende Stirnfläche von der Innenfläche zur Aussenfläche zurückspringt und mit der Achse des Spreizkörpers einen Winkel von etwa 40° bis etwa 60° einschliesst.

Vorzugsweise ist der Aufnahmespalt über einen Durchtritt mit einer Innengewindebohrung im rückwärtigen Abschnitt des Dübelkörpers verbunden. Dabei weist der Spreizkörper mit Vorteil eine laschenartige axiale Verlängerung auf, die bei vollständig in den Aufnahmespalt eingeschobenem Spreizkörper durch den Durchtritt in die Bohrung ragt. Diese Ausführungsvariante des erfindungsgemässen Spreizdübels erlaubt es, den korrekten Setzvorgang mit einfachen Hilfsmitteln zu überprüfen. Dazu wird ein Prüfstift, der an seinem Vorderende mit einer abragenden Lasche ausgestattet ist, in die Bohrung eingeführt und gedreht. Der Spreizdübel ist korrekt gesetzt, wenn die laschenartige Verlängerung am Spreizkörper in die Bohrung ragt und beim Zusammentreffen mit der Lasche am Vorderende des Prüfstifts ein weiteres Drehen verhindert.

Im folgenden wird die Erfindung unter Bezugnahme auf in den schematischen Zeichnungen dargestellte Ausführungsbeispiele näher erläutert. Es zeigen:
- Fig. 1: ein erstes Ausführungsbeispiel des Spreizdübels mit axial geschnittenem Dübelkörper;
- Fig. 2: eine perspektivische Dastellung des Spreizkörpers des Spreizdübels aus Fig. 1;
- Fig. 3: einen Axialschnitt einer Variante des Spreizdübels im gesetzten Zustand; und
- Fig. 4 bis Fig. 6: Querschnitte verschiedener Varianten des Spreizbereichs des Dübelkörpers.

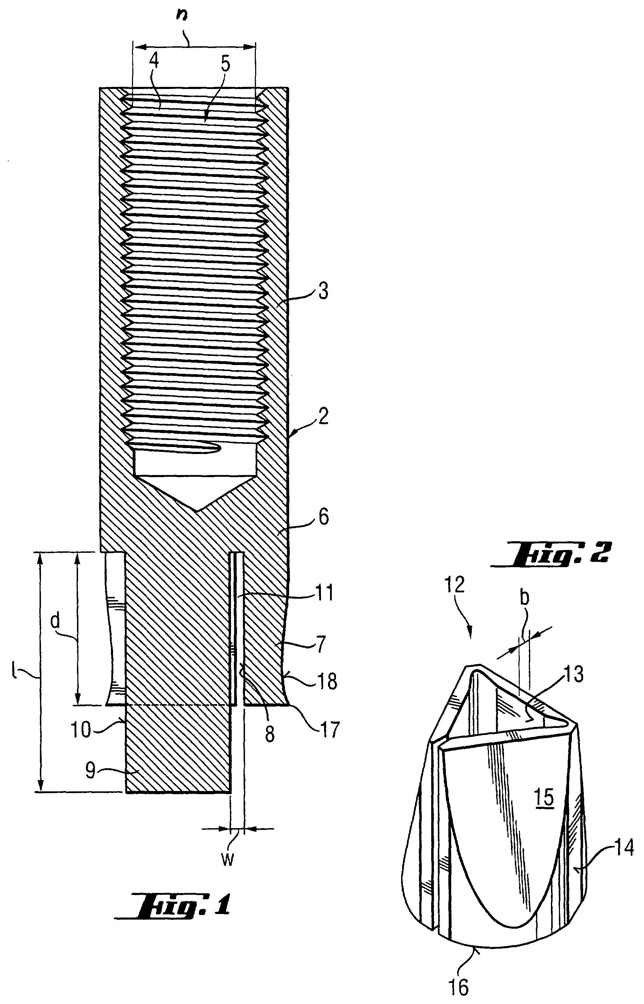

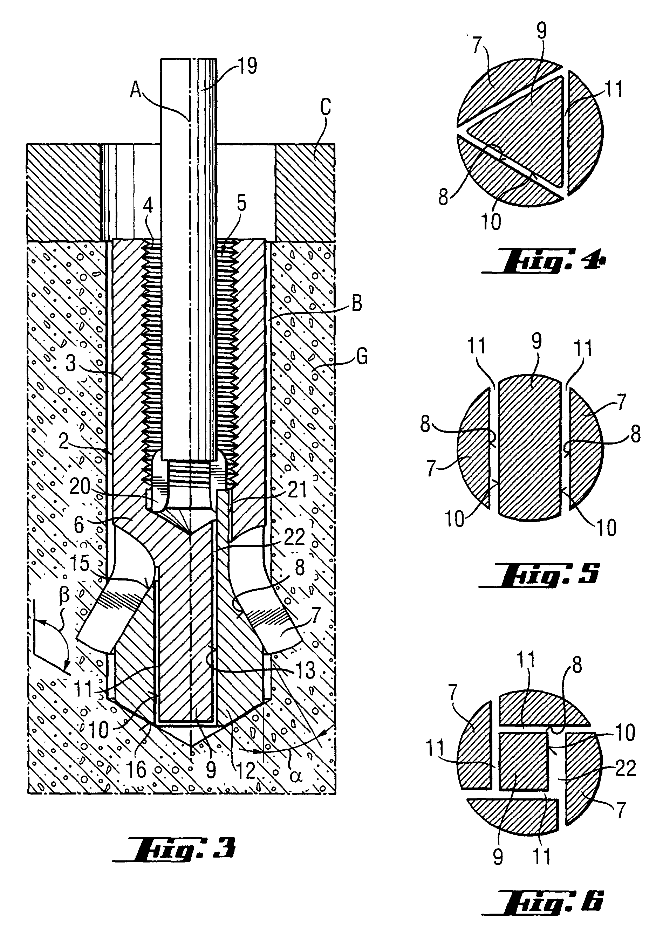

Fig. 1 und Fig. 2 zeigen ein erstes Ausführungsbeispiel des erfindungsgemässen Spreizdübels. Er umfasst einen Dübelkörper 2 mit einem rückwärtigen Abschnitt 3, der eine Bohrung 5 mit einem Innengewinde 4 aufweist, und einem vorderen Spreizbereich 6, der durch axiale Schlitze voneinander getrennte Spreizlappen 7 aufweist. Der Spreizbereich 6 ist mit einem im wesentlichen axial verlaufenden Aufnahmespalt 11 versehen, der am vorderen Ende des Dübelkörpers 2 mündet. Der Aufnahmespalt ist von der Rückfläche 8 der Spreizlappen 7 und von der Aussenfläche 10 eines Führungsstiftes 9 begrenzt, der ein Bestandteil des Dübelkörpers 2 ist. Der Aufnahme- spalt 11 dient zur Aufnahme eines Spreizkörpers 12, der hülsenförmig ausgebildet ist und eine Innenfläche 13 und eine Aussenfläche 14 besitzt. Wenigstens ein Teilbereich der Aussenfläche 13 des Spreizkörpers 12 ist als Keilfläche 15 ausgebildet. Der Querschnitt des Spreizkörpers 12 entspricht dem Querschnitt des Aufnahmespalts 11 im Spreizbereich 6 des Dübelkörpers 2.

Der Aufnahmespalt 11 weist eine axiale Tiefe d auf, die etwa 60% bis etwa 85% des Nenndurchmessers n des Innengewindes 4 im rückwärtigen Abschnitt 3 des Dübelkörpers 2 entspricht. Die anfängliche Breite w des Aufnahmespalts 11 entspricht der Mindestwandstärke b des Spreizkörpers 12, welche vorzugsweise zwischen etwa 5% bis etwa 20% des Nenngewindedurchmessers des Innengewindes 4 beträgt. Die Länge I des Führungsstifts 9 ist bei dem dargestellten Ausführungsbeispiel grösser als die Tiefe d des Aufnahmespalts 11. Vorzugsweise entspricht die Länge I der Länge des Spreizkörpers 12. Der Führungsstift 9 weist einen Spannungsquerschnitt auf, der wenigstens 25% der Summe der Spannungsquerschnitte der Spreizlappen 7 beträgt.

Die Spreizlappen 7 sind an ihren freien Vorderenden mit Schneiden 17 ausgestattet, die beim axial schlagenden Setzvorgang die Bohrlochwand meisselnd bearbeiten und somit im Bereich des Bohrlochgrunds zu einem Formschluss führen. Der Spanwinkel der Schneiden 17 liegt vorzugsweise zwischen etwa 5° und etwa 10°. Die der Bohrlochwand zugekehrte Aussenfläche 18 der Spreizlappen 7 ist torusartig ausgebildet, damit die Meisselkurve mit der Schleppkurve der Spreizlappen 7 weitgehend übereinstimmt und die Spreizlappen 7 in der Hintermeisselung eine möglichst flächige Anlage erzielen. Die torusartige Aussenfläche 18 der Spreizlappen kann aus Fertigungsgründen beispielsweise auch durch Zylinder- und Kegelflächen angenähert sein. Der Krümmungsradius einer dem tatsächlichen Verlauf der Aussenfläche 18 der Spreizlappen am nächsten kommenden Torusfläche beträgt etwa 300% bis etwa 450% des Nenndurchmessers n des Innengewindes 4.

Fig. 3 zeigt eine Variante des Spreizdübels, der formschlüssig in einem Bohrloch B im Untergrund G verankert ist. Mit C ist ein Anschlussbauteil angedeutet, das an der Oberfläche des Untergrunds G befestigt werden soll. Mit den Darstellungen in Fig. 1 und Fig. 2 übereinstimmende Elemente sind jeweils mit den gleichen Bezugszeichen versehen. Der Spreizkörper 12 ist vollständig in den Aufnahmespalt 11 eingetrieben. Die Innenfläche 13 des Spreizkörpers 12 und die Aussenfläche 10 des Führungsstifts 9 sowie die Keilflächen 15 an der Aussenfläche 14 des Spreizkörpers 12 und die Rückflächen 8 der Spreizlappen 7 wirken reibschlüssig zusammen und verhindern, dass der in den Aufnahmespalt 11 eingetriebene Spreizkörper 12 wieder ausgedrückt wird. Der Neigungswinkel α, den die Keilflächen 15 mit der gemeinsamen Achse A des Dübelkörpers 2 und des Spreizkörpers 12 einschliessen, beträgt etwa 5° bis etwa 25°. Um eine möglichst flächige Auflage des Spreizkörpers 12 am Grund des Bohrlochs B zu erzielen, besitzt der Spreizkörper 12 eine Stirnfläche 16, die von der Innenfläche 13 zur Aussenfläche 14 zurückspringt und mit der Achse A einen Winkel β einschliesst, der zwischen etwa 40° und 60° beträgt.

Der in Fig. 3 dargestellte Spreizdübel unterscheidet sich von dem Ausführungsbeispiel gemäss Fig. 1 und 2 insbesondere durch eine laschenartige Verlängerung 21, die axial vom der Stirnfläche 16 gegenüberliegenden Ende des Spreizkörpers 12 abragt. Die laschenartige Verlängerung 21 ragt bei einem vollständig in den Aufnahmespalt 11 eingeschlagenem Spreizkörper 12 durch einen Durchtritt 22 in die Bohrung 5 im rückwärtigen Abschnitt 3 des Dübelkörpers 2. Durch diese Modifikation kann im Nachhinein sehr einfach die korrekte Verspreizung des Spreizdübels überprüft werden. Dazu wird ein Prüfstift 19, der an seinem Vorderende mit wenigstens einer axial abragenden Lasche 20 ausgestattet ist, in die Bohrung 5 eingeführt und gedreht. Der Spreizdübel ist korrekt gesetzt, wenn die laschenartige Verlängerung am Spreizkörper 21 in die Bohrung 5 ragt und beim Zusammentreffen mit der Lasche 20 am Vorderende des Prüfstifts 19 ein weiteres Drehen verhindert.

In Fig. 4 - 6 sind verschiedene Varianten der Querschnittskontur des Aufnahmespalts 11 dargestellt. Dabei entspricht die Querschnittskontur in Fig. 4 der Ausbildung des Aufnahmespalts 11 des in Fig. 1 dargestellten Dübelkörpers zur Aufnahme eines dreieckigen Spreizkörpers gemäss Fig. 2. Die sehnenartig verlaufenden axialen Schlitze bilden einen Aufnahmespalt 11 mit einer geschlossenen Kontur, die im dargestellten Beispiel die Form eines gleichseitigen Dreiecks aufweist. Die axialen Schlitze definieren gleichzeitig die drei Spreizlappen 7, die um die Breite des Aufnahmespalts 11 voneinander getrennt sind. Der Führungsstift 9 hat einen dreieckigen Querschnitt. Der Aufnahmespalt 11 ist von der Rückfläche 8 der Spreizlappen 7 und von der Aussenfläche 10 des Führungsstifts begrenzt. Fig. 5 zeigt eine Variante eines Spreizdübels, bei dem der Aufnahmespalt 11 zwei parallel verlaufende Schlitze umfasst, die gleichzeitig die Spreizlappen 7 festlegen. Der zwischen den Spreizlappen 7 verbleibende Führungsstift 9 besitzt einen im wesentlichen rechteckigen Querschnitt mit zwei einander gegenüberliegenden, gekrümmten Seiten. Der zugehörige hülsenförmige Spreizkörper kann beispielsweise einen Querschnitt aufweisen, der im wesentlichen dem Verlauf des Querschnitts des Führungsstifts 9 entspricht. Fig. 6 zeigt ein weiteres Beispiel eines Aufnahmespalts 11 für einen hülsenförmigen Spreizkörper. Die geschlossene Kontur des Aufnahmespalts 11 weist eine viereckige, vorzugsweise quadratische, Form auf. Dabei entspricht die Kontur des Aufnahmespalts 11 dem anhand von Fig. 3 illustrierten Ausführungsbeispiel eines Spreizdübels. Der zugehörige Spreizkörper weist einen quadratischen Querschnitt auf. Die durch die vier axialen Schlitze festgelegten Spreizlappen 7 umschliessen einen Führungsstift 9 mit quadratischem Querschnitt.

Der Aufnahmespalt kann auch noch andere Querschnittskonturen aufweisen, die geschlossen oder offen ausgebildet sein können. Beispielsweise kann der Aufnahmekanal auch durch eine Ringbohrung gebildet sein. Axiale Schlitze, die vom Umfang des Dübelkörpers zur Ringbohrung reichen, trennen die Spreizlappen voneinander. Im Fall einer Ringbohrung besitzt der Führungsstift einen kreisförmigen Querschnitt. Der hülsenförmige Spreizkörper weist ebenfalls einen weitgehend kreisförmigen Querschnitt auf. Die Keilflächen können in diesem Fall beispielsweise als Kegelflächen ausgebildet sein.

Der Dübelkörper des erfindungsgemässen Spreizdübels besteht üblicherweise aus Stahl. Die Umformung des Dübelkörpers erfolgt spanend oder auch kalt. Die den Aufnahmekanal bildenden und die Spreizlappen voneinander trennenden axialen Schlitze werden gesägt oder in einem Kaltumformverfahren, beispielsweise durch Fliesspressen, erstellt. Der hülsenförmige Spreizkörper ist gleichfalls spanend oder in einem Kaltumformverfahren herstellbar. In einer vorteilhaften Variante der Erfindung ist der Spreizkörper aus einem Blechstanzbiegeteil geformt. Der derart durch Zusammenrollen oder -falten hergestellte Spreizkörper muss dabei nicht vollständig geschlossen sein. Es genügt, wenn die mit den Keilflächen versehenen Wandteile einstückig miteinander verbunden sind.

## Patentansprüche

1. Spreizdübel mit einem Dübelkörper (2), der an seinem hinteren Ende mit einem Lastangriffsmittel (4) ausgestattet ist und an seinem dem Lastangriffsmittel (4) gegenüberliegenden Endabschnitt einen Spreizbereich (6) aufweist, der einen oder mehrere durch axial verlaufende Schlitze voneinander getrennte Spreizlappen (7) aufweist und mit einer am vorderen Ende des Dübelkörpers (2) mündenden Aussparung versehen ist, in der ein Spreizkörper (12) gehalten und unter radialem Aufweiten des Spreizbereichs (6) axial verschiebbar ist, **dadurch gekennzeichnet, dass** die Aussparung von wenigstens einem axial verlaufenden Aufnahmespalt (11) gebildet ist, dessen achsnähere Begrenzungsfläche (10) von einem Führungsstift (9) und dessen zweite Begrenzungsfläche von der Rückfläche (8) der Spreizlappen (7) gebildet ist, und der Spreizkörper (12) im wesentlichen hülsenartig ausgebildet ist und eine Innenfläche (13) aufweist, deren Verlauf mit der achsnäheren Begrenzungsfläche (10) des Aufnahmespalts (11) im wesentlichen übereinstimmt, und die Aussenfläche (14) des Spreizkörpers (12) wenigstens bereichsweise als Keilfläche (15) ausgebildet ist, wobei der hülsenförmige Spreizkörper (12) im radial ausgestellten Zustand der Spreizlappen (7) in weitgehend flächiger Anlage zu den beiden Begrenzungsflächen (8, 10) des Aufnahmespalts (11) ist.

2. Spreizdübel nach Anspruch 1, **dadurch gekennzeichnet, dass** der Führungsstift (9) einen Spannungsquerschnitt aufweist, der wenigstens 25% der Summe der Spannungsquerschnitte der Spreizlappen (7) beträgt.

3. Speizdübel nach Ansprch 1 oder 2, **dadurch gekennzeichnet, dass** das Lastangriffsmittel (4) ein in einer Bohrung (5) im rückwärtigen Abschnitt (3) des Dübelkörpers (2) vorgesehenes Innengewinde bzw. ein Aussengewinde einer Gewindestange ist, wobei die axiale Tiefe (d) des Aufnahmespalts 60% bis 85 % des Nenndurchmessers (n) des Anschlussgewindes (4) beträgt.

4. Spreizdübel nach Anspruch 3, **dadurch gekennzeichnet, dass** der Führungsstift (9) eine axiale Länge (I) aufweist, die gleich oder grösser ist als die axiale Tiefe (d) des Aufnahmespalts (11) und vorzugsweise der axialen Länge des Spreizkörpers (12) entspricht.

5. Spreizdübel nach einem der vorangehenden Ansprüche, **dadurch gekennzeichnet, dass** der Aufnahmespalt (11) wenigstens zwei Schlitze umfasst, die sich vom Vorderende des Dübelkörpers (2) aus axial erstrecken und sehnenartig am Umfang des Dübelkörpers (2) münden.

6. Spreizdübel nach einem der vorangehenden Ansprüche, **dadurch gekennzeichnet, dass** der Aufnahmespalt (11) für den Spreizkörper (12) in Draufsicht eine geschlossene Kontur aufweist.

7. Spreizdübel nach Anspruch 5 oder 6, **dadurch gekennzeichnet, dass** der Aufnahmespalt (11) in Draufsicht eine vorzugsweise gleichseitige, dreieckförmige Kontur aufweist und durch drei Schlitze gebildet ist, die sich vom Vorderende des Dübelkörpers (2) aus axial erstrecken und sehnenartig am Umfang des Dübelkörpers (2) münden.

8. Spreizdübel nach einem der vorangehenden Ansprüche, **dadurch gekennzeichnet, dass** die Keilfläche (15) des Spreizkörper (12) mit seiner Achse (A) einen Winkel (α) von etwa 5° bis etwa 25° einschliesst.

9. Spreizdübel nach einem der vorangehenden Ansprüche, **dadurch gekennzeichnet, dass** eine an den durchmessergrössten Abschnitt des Spreizkörpers (12) anschliessende Stirnfläche (16) von der Innenfläche (13) zur Aussenfläche (14) zurückspringt und mit der Achse (A) des Spreizkörpers (12) einen Winkel (β) von etwa 40° bis etwa 60° einschliesst.

10. Spreizdübel nach einem der vorangehenden Ansprüche, **dadurch gekennzeichnet, dass** der Aufnahmespalt (11) über einen Durchtritt (22) mit einer Innengewindebohrung (5) im rückwärtigen Abschnitt (3) des Dübelkörpers (2) verbunden ist, und der Spreizkörper (12) eine laschenartige axiale Verlängerung (21) aufweist, die bei vollständig in den Aufnahmespalt (11) eingetriebenem Spreizkörper (12) durch den Durchtritt (22) in die Bohrung (5) ragt.

## Claims

1. An expanding dowel comprising a dowel body (2) equipped at its rearward end with load-engaging means (4) and having in its end section opposite to the load-engaging means (4) an expansion zone (6) having one or more expanding tabs (7) separated by axially disposed slots, and comprising a recess which opens at the forward end of the dowel body (2), in which recess an expansion body (12) is retained and is axially displaceable with accompanying radial expansion of the expansion zone (6), **characterised in that** the recess is formed by at least one axially disposed receiving gap (11) the delimiting face (10) of which closer to the axis is formed by a guide peg (9) and the second delimiting face of which is formed by the rear faces (8) of the expanding tabs (7), and the expansion body (12) has a substantially bush-like configuration and has an inner face (13) the disposition of which substantially coincides with the delimiting face (10) of the receiving gap (11) closer to the axis, and the outer face (14) of the expansion body (12) takes at least zonally the form of a wedge-shaped face (15), the bush-like expansion body (12) abutting against the two delimiting faces (8, 10) of the receiving gap (11) in a largely planar manner in the radially expanded state of the expanding tabs (7).

2. An expanding dowel according to Claim 1, **characterised in that** the guide peg (9) has a stressed cross-section which equals at least 25% of the sum of the stressed cross-sections of the expanding tabs (7).

3. An expanding dowel according to Claim 1 or 2, **characterised in that** the load-engaging means (4) are an internal thread and an external thread of a threaded rod provided in a bore (5) in the rearward section (3) of the dowel body (2), the axial depth (d) of the receiving gap being equal to 60% to 85% of the nominal diameter (n) of the connecting thread (4).

4. An expanding dowel according to Claim 3, **characterised in that** the guide peg (9) has an axial length (I) which is equal to or greater than the axial depth (d) of the receiving gap (11) and preferably corresponds to the axial length of the expansion body (12).

5. An expanding dowel according to any one of the preceding claims, **characterised in that** the receiving gap (11) includes at least two slots which extend axially from the forward end of the dowel body (2) and open on the circumference of the dowel body (2) in the manner of chords.

6. An expanding dowel according to any one of the preceding claims, **characterised in that** the receiving gap (11) for the expansion body (12) has a closed contour in plan view.

7. An expanding dowel according to Claim 5 or 6, **characterised in that** the receiving gap (11) has in plan view a preferably equilateral, triangular contour and is formed by three slots extending axially from the forward end of the dowel body (2) and opening on the circumference of the dowel body (2) in the manner of chords.

8. An expanding dowel according to any one of the preceding claims, **characterised in that** the wedge-shaped face (15) of the expansion body (12) includes with its axis (A) an angle (α) of approximately 5° to approximately 25°.

9. An expanding dowel according to any one of the preceding claims, **characterised in that** an end face (16) adjoining the section of the expansion body (12) having the largest diameter tapers back from the inner face (13) to the outer face (14) and includes with the axis (A) of the expansion body (12) an angle (β) of approximately 40° to approximately 60°.

10. An expanding dowel according to any one of the preceding claims, **characterised in that** the receiving gap (11) is connected via an aperture (22) to an internally threaded bore (5) in the rearward section (3) of the dowel body (2), and the expansion body (12) has a shackle-like axial prolongation (21) which projects through the aperture (22) into the bore (5) when the expansion body (12) is driven fully into the receiving gap (11).

## Revendications

1. Cheville à expansion comprenant un corps de cheville (2) qui est muni, à son extrémité arrière, d'un moyen d'application de charge (4) et comporte, dans sa portion extrême située à l'opposé du moyen d'application de charge (4), une zone d'expansion (6), laquelle comporte une ou plusieurs pattes expansibles (7) séparées les unes des autres par des fentes axiales et est pourvue d'un évidement qui débouche à l'extrémité avant du corps de cheville (2) et dans lequel un corps d'expansion (12) est maintenu et peut se déplacer axialement en déployant radialement la zone d'expansion (6), **caractérisée en . ce que** l'évidement est formé par au moins une fente réceptrice axiale (11) dont la surface de délimitation (10) la plus proche de l'axe est formée par une broche de guidage (9) et dont la seconde surface de délimitation est formée par la face arrière (8) des pattes expansibles (7), et le corps d'expansion (12) est conformé sensiblement en manchon et comporte une face intérieure (13) dont le tracé coïncide sensiblement avec la surface de délimitation (10) la plus proche de l'axe de la fente réceptrice (11), et la surface extérieure (14) du corps d'expansion (12) est conformée au moins par endroits en surface cunéiforme (15), le corps d'expansion en forme de manchon (12) étant, à l'état radialement déployé des pattes expansibles (7), en contact en grande partie à plat avec les deux surfaces de délimitation (8, 10) de la fente réceptrice (11).

2. Cheville à expansion selon la revendication 1, **caractérisée en ce que** la broche de guidage (9) présente une section de résistance qui correspond au moins à 25 % de la somme des sections de résistance des pattes expansibles (7).

3. Cheville à expansion selon la revendication 1 ou 2, **caractérisée en ce que** le moyen d'application de charge (4) est un taraudage prévu dans un trou (5) de la portion arrière (3) du corps de cheville (2), respectivement un filetage extérieur d'une tige filetée, la profondeur axiale (d) de l'interstice récepteur correspondant à 60 % à 85 % du diamètre nominal (n) du filetage de raccordement (4).

4. Cheville à expansion selon la revendication 3, **caractérisée en ce que** la broche de guidage (9) présente une longueur axiale (1) qui est égale ou supérieure à la profondeur axiale (d) de la fente réceptrice (11) et, de préférence, correspond à la longueur axiale du corps d'expansion (12).

5. Cheville à expansion selon une des revendications précédentes, **caractérisée en ce que** la fente réceptrice (11) comprend au moins deux encoches qui s'étendent axialement à partir de l'extrémité avant du corps de cheville (2) et débouchent sous forme de cordes dans la circonférence du corps de cheville (2).

6. Cheville à expansion selon une des revendications précédentes, **caractérisée en ce que** la fente réceptrice (11) pour le corps d'expansion (12) présente, en vue de dessus, un contour fermé.

7. Cheville à expansion selon la revendication 5 ou 6, **caractérisée en ce que** la fente réceptrice (11) présente, en vue de dessus, un contour triangulaire, de préférence équilatéral, et est formée par trois encoches qui s'étendent axialement à partir de l'extrémité avant du corps de cheville (2) et débouchent sous forme de cordes dans la circonférence du corps de cheville (2).

8. Cheville à expansion selon une des revendications précédentes, **caractérisée en ce que** la surface cunéiforme (15) du corps d'expansion (12) forme, avec son axe (A), un angle (α) d'environ 5° à environ 25°.

9. Cheville à expansion selon une des revendications précédentes, **caractérisée en ce qu'**une face frontale (16) raccordée à la portion de plus grand diamètre du corps d'expansion (12) se trouve en retrait de la face intérieure (13) vers la surface extérieure (14) et forme, avec l'axe (A) du corps d'expansion (12), un angle (β) d'environ 40° à environ 60°.

10. Chevillé à expansion selon une des revendications précédentes, **caractérisée en ce que** la fente réceptrice (11) est reliée, par l'intermédiaire d'un passage (22), à un trou taraudé (5) dans la portion arrière (3) du corps de cheville (2), et le corps d'expansion (12) comporte un prolongement axial en forme de languette (21) qui, lorsque le corps d'expansion (12) est complètement enfoncé dans la fente réceptrice (11), pénètre dans le trou (5) à travers le passage (22).
